# EUROPÄISCHE PATENTSCHRIFT

(11) **EP 4 573 140 B1**
(45) Veröffentlichungstag und Bekanntmachung des Hinweises auf die Patenterteilung: **17.06.2026**
(21) Anmeldenummer: 23757588.1
(22) Anmeldetag: 14.08.2023
(51) Int. Cl.: C08G 18/20, B01J 31/02, C08G 18/48, C08G 18/76, C08G 18/30, C08J 9/00, C08J 9/08, C08J 9/14, C08G 101/00

(54) **NEUE POLYURETHAN-SCHAUMKATALYSATOREN MIT VERBESSERTER LAGERSTABILITÄT**
NOVEL POLYURETHANE FOAM CATALYSTS WITH IMPROVED STORAGE STABILITY
NOUVEAUX CATALYSEURS EN MOUSSE DE POLYURÉTHANE À STABILITÉ AU STOCKAGE AMÉLIORÉE

(30) Priorität: 16.08.2022 EP 22190588
(43) Veröffentlichungstag der Anmeldung: 25.06.2025
(73) Patentinhaber: BASF SE, 67056 Ludwigshafen am Rhein (DE)
(72) Erfinder: KIERAT, Radoslaw, 67056 Ludwigshafen am Rhein (DE); HENNINGSEN, Michael, 67056 Ludwigshafen am Rhein (DE); BOEHRINGER, Julian, 67056 Ludwigshafen am Rhein (DE)
(74) Vertreter: BASF IP Association
(86) Internationale Anmeldenummer: PCT/EP2023/072411
(87) Internationale Veröffentlichungsnummer: WO 2024/038025

(56) Entgegenhaltungen:
- EP-A1- 2 602 023
- WO-A1-2013/017554
- JP-A- 2002 220 429
- US-A1- 2011 201 709

## Beschreibung

Die Erfindung betrifft die Verwendung einer Polyolmischung enthaltend ein Polyol, ein Hydrohalogenolefin-Treibmittel, Wasser und einen Imidazoliumsalz-Katalysator, ein Verfahren zur Herstellung von Polyurethan-Hartschaumstoffen sowie die Verwendung des Imidazoliumsalzes als Katalysator.

Polyurethan-Hartschaumstoffe sind seit langem bekannt und vielfach beschrieben worden. Der Einsatz der Polyurethan-Hartschaumstoffe erfolgt vorwiegend zur Wärmeisolation, beispielsweise in Kältegeräten, Transportmitteln oder Gebäuden sowie zur Herstellung von Bauelementen, insbesondere Sandwich-Elementen.

Es ist wichtig, dass die Polyurethan-Hartschaumstoffe die Hohlräume gleichmäßig und lunkerfrei ausfüllen, so dass durch möglichst gute Verbindung mit den Deckschichten eine stabile Konstruktion erzeugt wird, die für eine gute thermische Isolation sorgt. Um Schaumfehlstellen zu verhindern, muss hierzu das schaumfähige PU-Reaktionsgemisch innerhalb einer kurzen Zeit in den zu isolierenden Hohlraum eingeführt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von Polyurethan-Hartschaumstoffen und ihre Verwendung als Deck- oder Kernschicht in Verbundelementen sowie ihre Anwendung als Dämmschicht in der Kühl- oder Heizungstechnik findet sich z.B. in "Polyurethane", Kunststoff-Handbuch, Band 7, 3. Auflage 1993, herausgegeben von Dr. Günter Oertel, Carl-Hanser-Verlag, München/Wien.

Geeignete Polyurethan-Hartschaumstoffe können in bekannter Weise durch Umsetzung von organischen Polyisocyanaten mit einer oder mehreren Verbindungen mit mindestens zwei reaktiven Wasserstoffatomen in Gegenwart von Treibmitteln, Katalysatoren und gegebenenfalls Hilfsmitteln und/oder Zusatzstoffen hergestellt werden.

Als Verbindungen mit mindestens zwei mit Isocyanatgruppen reaktiven Wasserstoffatomen werden bei der Herstellung der Polyurethane vorzugsweise Polyetheralkohole und/oder Polyesteralkohole eingesetzt. Die Auswahl der Polyole erfolgt insbesondere unter Berücksichtigung der Kosten- und der gewünschten Anwendungseigenschaften (z.B. EP-A 1 632 511, US-B 6,495,722, WO 2006/108833).

Polyurethanschaumzusammensetzungen werden typischerweise durch Umsetzen eines Isocyanats und einer Vormischung (Premix) enthaltend Isocyanat-reaktiven Komponenten wie Polyole, vorzugsweise Polyetheralkohole und/oder Polyesteralkohole, hergestellt. Die Vormischung enthält gegebenenfalls noch weitere Komponenten wie Wasser, Flammschutzmittel, Treibmittel, schaumstabilisierende Tenside und Katalysatoren zur Förderung der Reaktion von Isocyanat mit Polyol unter Bildung von Urethan sowie der Reaktion mit Wasser unter Bildung von Harnstoff und Freisetzung von CO₂. Das Treibmittel in der Vormischung ist üblicherweise eine Flüssigkeit mit einem ausreichend niedrigen Siedepunkt, das durch die während der Polymerisationsreaktion freigesetzte Wärme verdampft wird. Beispiele für Treibmittel, die bei der Herstellung von isolierendem Polyurethanschaum verwendet werden, sind Fluorkohlenwasserstoffe, Hydrofluorolefine, Hydrofluorchlorolefine, Hydrochlorfluorkohlenwasserstoffe, Formiate und Kohlenwasserstoffe. Für einige Anwendungen wird die Vormischung bis zu einem Jahr gelagert, bevor sie mit Isocyanat zum Polyurethanschaum umgesetzt wird. Dies ist bei Sprühschaumanwendungen üblich, bei denen Fässer mit der Vormischung einerseits und dem Isocyanat andererseits zur Anwendung vor Ort geliefert werden. Daher ist es wünschenswert, dass die Vormischung sowohl chemisch als auch physikalisch stabil ist. Die Katalysatoren, die zur Förderung der Polyurethanreaktion geeignet sind, können jedoch unerwünschte Reaktionen mit den in der Vormischung vorhandenen Treibmitteln eingehen oder diese induzieren, was zu einer verringerten Lagerstabilität der Vormischung führt. Diese unerwünschten Reaktionen treten mit Treibmitteln auf, die Halogene enthalten, und insbesondere mit ungesättigten halogenierten Treibmitteln. Übliche Aminkatalysatoren, die für die Herstellung von Polyurethanschaum geeignet sind, umfassen tertiäre Amine, wie N,N,N',N",N"-Pentamethyldiethylentriamin oder 1,4-Diazabicyclo[2.2. 2]octan. Die Reaktion zwischen tertiärem Amin und halogenhaltigen organischen Verbindungen findet schneller statt, wenn das Halogenatom an einen olefinischen Kohlenstoff gebunden ist, da Halogen-substituierte Olefine nukleophilen Angriffen durch tertiäre Amine ausgesetzt sind, was zu einer schnellen Desaktivierung der tertiären Aminkatalysatoren führt.

EP 3 091 044 A1 offenbart eine Polyol-Premixzusammensetzung, umfassend ein Hydrohalogenolefin-Treibmittel, mindestens ein Polyol, Wasser und einen Katalysator umfassend mindestens 10 Gew.-% Tetramethylguanidin und 10 bis 90 Gew.-% eines oder mehrerer tertiärer Amine mit einer gegenüber Isocyanat reaktiven Gruppe, ausgewählt aus 2-[N-(Dimethylamino-ethoxyethyl)-N-methylamino]ethanol und N,N,N'-Trimethyl-N'-3-aminopropyl-bis(aminoethyl)ether.

EP 2 504 372 A1 offenbart eine Beschichtungszusammensetzung umfassend
(A) mindestens ein Polyisocyanat, erhältlich durch Umsetzung mindestens eines monomeren Isocyanats,
(B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
(C) mindestens ein Imidazoliumsalz,
(D) optional ein Lösungsmittel,
(E) optional einen von (C) verschiedenen weiteren Urethanisierungskatalysator, sowie
(F) optional weitere lacktypische Komponenten und/oder Additive.

US 2011/201709 A1 betrifft ein Trimerisierungskatalysatoren-System für Isocyanate, einen entsprechenden Prozess sowie daraus hergestellte PUR/PIR-Hartschaumstoffe, welche zur Wärmeisolation verwendet werden. Offenbart wird allgemein eine Polyolmischung beinhaltend A) ein Polyol; B) ein Treibmittel; C) Wasser; D) ein Katalysatorsystem. Offenbart wird weiterhin eine repräsentative Polyolmischung enthaltend
A) 100 phpp (74,1 Gew.-%) eines aromatischen Polyesterpolyols;
B) 17 phpp (12,6 Gew.-%) eines Treibmittels (n-Pentan);
C) Wasser (10 phpp; 7,4 Gew.-);
D) 6 phpp (4,4 Gew.-%) Katalysatorsysteme auf Basis von 1-Ethyl-3-methylimidazoliumacetat, 1,3-di-tert-Butylimidazoliniumacetat, 1,3-Diadamantylimidazoliumacetat, 1,3-Diisopropylimidazoliumacetat, 1-Butyl-methylimidazoliumacetat;
E) 2 phpp (1,5 Gew.-%) Flammschutzmittel, Tensid.

Die WO 2013/017554 A1 betrifft ebenfalls ein Verfahren zur Herstellung von PU-Hartschaumstoffen durch Umsetzung von a) wenigstens einem organischen Polyisocyanat mit b) wenigstens einer Polyolkomponente in Gegenwart eines Treibmittelgemisches enthaltend Wasser und halogenierte Alkene, welche eine niedrige Wärmeleitfähigkeit aufweisen. Die WO 2013/017554 A1 setzt hierbei Hydrohalogenolefin-Treibmittel in einer Polyolmischung ein. Offenbart wird jedoch kein Imidazoliumsalz-Katalysator, sondern nur ganz allgemein "Imidazole".

Die JP 2002220429 A betrifft PU-Hartschaumstoffe, welche eine verbesserte Lagerstabilität der Komponenten aufweist. Offenbart wird eine Polyolmischung beinhaltend A) ein Mannich-Polyol, ein Polyetherpolyol oder ein Polyesterpolyol; B) ein Treibmittel auf Basis halogenierter Kohlenwasserstoffe; C) Wasser; einen Katalysator auf Basis von 1-Isobutyl-2-methylimidazol.

Die EP 2 602 023 A betrifft eine Katalysatorkombination enthaltend ein Carbonsäuresalz einer Imidazoliumverbindung und tertiäres Amin und ein Verfahren zur Herstellung von PU-Schaumstoffkörpern, bei dem man (a) organische Polyisocyanate mit (b) Polyolen, (c) Treibmitteln, enthaltend Wasser, (d) Katalysator, enthaltend ein Carbonsäuresalz einer Imidazoliumverbindung und ein tertiäres Amin. Offenbart wird eine Polyolmischung auf Basis von A) eines Polyetherpolyols oder Polymerpolyols; C) Wasser (als Treibmittel eingesetzt); D) 1-Butyl-3-methylimidazoliumacetat oder 1-Ethyl-3-methylimidazoliumacetat als Katalysatoren. Offenbart wird jedoch kein Hydrohalogenolefin-Treibmittel.

Aufgabe der Erfindung ist es, einen Polyurethan-Treibkatalysator bereitzustellen, der lagerungsstabil ist und in einer Polyolmischung enthaltend ein Hydrohalogenolefin-Treibmittel nicht deaktiviert wird.

Gelöst wird die Aufgabe durch die Verwendung einer Polyolmischung umfassend
a) von 10 bis 99,7 Gew.-% mindestens eines Polyols als Komponente A,
b) von 0,1 bis 30 Gew.-% eines Hydrohalogenolefin-Treibmittels enthaltend trans-1-Chlor-3,3,3-trifluoropropen als Komponente B,
c) von 0,1 bis 10 Gew.-% Wasser als Komponente C,
d) von 0,1 bis 10 Gew.-% eines Katalysators als Komponente D,
e) optional von 0 bis 80 Gew.-% eines oder mehrerer weiterer Additive als eine oder mehrere weitere Komponenten E,

dadurch gekennzeichnet, dass der Katalysator D ein Imidazoliumsalz der allgemeinen Formel (I) enthält, 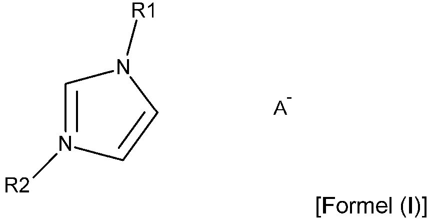
worin R1, R2 unabhängig voneinander einen aliphatischen, cycloaliphatischen, araliphatischen oder aromatischen Rest mit 1 bis 20 Kohlenstoffatomen, der daneben noch ein oder mehrere Heteroatome enthalten kann, bedeuten,
worin A- ein Carboxylatanion mit 1 bis 20 Kohlenstoffatomen, das daneben noch ein oder mehrere weitere Heteroatome enthalten kann, bedeutet,
für Sprühschaum-Anwendungen.

Die Heteroatome können ausgewählt sein aus Sauerstoff, Stickstoff, Schwefel und Phosphor. Beispielsweise können R1, R2 1 bis 5 Heteroatome und A- 1 bis 5 weitere Heteroatome enthalten.

Die Polyolmischung umfasst als Komponente A mindestens ein Polyol. In bevorzugten Ausführungsformen umfasst die Polyolkomponente Polyole, die typischerweise zur Herstellung von PIR/PUR-Hartschaum (Polyisocyanurat und/oder Polyurethan) verwendet werden. Solche Polyole schließen Polyalkylenether und Polyesterpolyole ein, sind aber nicht darauf beschränkt. In einer Ausführungsform umfasst der Polyalkylenether ein Poly(alkylenoxid)-Polymer, wie etwa Poly(ethylenoxid)- und Poly(propylenoxid)-Polymere und -Copolymere mit endständigen Hydroxylgruppen, die von mehrwertigen Verbindungen abgeleitet sind, einschließlich Diolen und Triolen, beispielsweise unter anderem Ethylen Glykol, Propylenglykol, 1,3-Butandiol, 1,4-Butandiol, 1,6-Hexandiol, Neopentylglykol, Diethylenglykol, Dipropylenglykol, Pentaerythrit, Glycerin, Diglycerin, Trimethylolpropan, Cyclohexandiol, Zucker wie z Saccharose und ähnliche Polyole mit niedrigem Molekulargewicht oder Kombinationen davon. In einer anderen Ausführungsform umfasst die Polyolkomponente Aminpolyetherpolyole, die hergestellt werden können, wenn ein Amin, wie etwa Ethylendiamin, Diethylentriamin, Tolylendiamin, Diphenylmethandiamin, Triethanolamin oder dergleichen, mit Ethylenoxid oder Propylenoxid umgesetzt wird. In einer Ausführungsform, die auf eine Sprühschaumformulierung gerichtet ist, enthält die Polyolkomponente Polyetherpolyole, wodurch die Reaktivität der Polyurethanzusammensetzung erhöht wird.

In einer Ausführungsform werden die Polyetherpolyole durch Kondensation von Phenol mit Formaldehyd in Gegenwart von hydroxylhaltigen Aminen wie Diethanolamin, Ethanolamin und dergleichen hergestellt.

Die Polyetherpolyole werden nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliummethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit LewisSäuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt. Geeignete Polyetherpolyole können auch mittels DMC-Katalysatoren hergestellt sein.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Propylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose. Besonders bevorzugt sind die oben genannten primären Amine, beispielsweise 2,3-Toluylendiamin.

Die Polyetherpolyole, vorzugsweise Polyoxypropylenpolyole und/oder Polyoxyethylenpolyole, besitzen eine Funktionalität von vorzugsweise 2 bis 6 und insbesondere 2 bis 5 und zahlenmittlere Molekulargewichte von 150 bis 3000, vorzugsweise 200 bis 1500 und insbesondere 250 bis 750.

Geeignete Polyesterpolyole können beispielsweise aus organischen Dicarbonsäuren mit 2 bis 12 Kohlenstoffatomen, vorzugsweise aromatischen oder einem Gemisch aus aromatischen und aliphatischen Dicarbonsäuren, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. w-Hydroxycapronsäure.

Zur Herstellung der Polyesterpolyole kommen auch biobasierte Ausgangsstoffe und/oder deren Derivate in Frage, wie z. B. Rizinusöl, Palmöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Myristoleinsäure, Palmitoleinsäure, Stearinsäure, Palmitinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Bevorzugte Polyesterpolyole sind aus Adipinsäure, Phthalsäureanhydrid und/oder Terephthalsäureanhydrid als Dicarbonsäuren und Propylenglykol, Dipropylenglykol, Ethylenglykol, Diethylenglykol, Glycerin und/oder Trimethylolpropan als Alkoholkomponente sowie Ölsäure oder Rizinusöl hergestellt und weisen eine OH-Zahl von 150 bis 400 und eine Funktionalität von 2 bis 4,5 auf.

Die Polyolmischung umfasst als Katalysator D ein Imidazoliumsalz der allgemeinen Formel (I).

R1 und R2 in Formel (I) sind vorzugsweise unabhängig voneinander ein aliphatisches, cycloaliphatisches, araliphatisches oder aromatisches organisches Radikal mit 1 bis 10 Kohlenstoffatomen. Beispiele für Kohlenwasserstoffradikale umfassen die Phenygruppe, die Benzylgruppe, mit einer oder mehreren C1-C4-Alkylgruppen substituierte Phenyl- oder Benzylgruppen, wie die Mesitylylgruppe, weiterhin Alkylgruppen und Alkenylgruppen, insbesondere Alkylgruppen.

Vorzugsweise sind R1 und R2 unabhängig voneinander eine C1-C18-Alkylgruppe, bevorzugt eine C1-C16- Alkylgruppe, besonders bevorzugt eine C1-C14-Alkylgruppe, weiter bevorzugt eine C1-C12-Alkylgruppe und insbesondere bevorzugt eine C1-C10-Alkylgruppe. Ganz besonders bevorzugt sind R1 und R2 unabhängig voneinander eine C1-C6-Alkylgruppe, insbesondere eine C1-C4-Alkylgruppe. Insbesondere bevorzugt sind R1 und R2 unabhängig voneinander ausgewählt aus Methyl, Ethyl, n-Propyl, Isopropyl, n-Butyl, sec-Butyl oder tert-Butyl, wovon Methyl, Ethyl n-Propyl und n-Butyl speziell bevorzugt sind.

Beispiele für Imidazoliumionen sind 1,3-Dimethylimidazolium (DMIM), 1-Benzyl-3-methylimidazolium, 3-Ethyl-1-methylimidazolium (EMIM), 1-Propyl-3-methylimidazolium, 3-n-Butyl-1-methylimidazolium, 1-Hexyl-3-methylimidazolium, 1-Methyl-3-octylimidazolium, 1-Decyl-3-methylimidazolium, 1-Dodecyl-3-methylimidazolium, 1,3-Diethylimidazolium (DEIM), 1,3-Diisopropylimidazolium, 1,3-Di-n-butylimidazolium, 1,3-Dihexylimidazolium.

Bevorzugte Imidazoliumionen sind 1,3-Dimethylimidazolium (DMIM), 3-Ethyl-1-methylimidazolium (EMIM), und 1,3-Diethylimidazolium (DEIM). Besonders bevorzugt sind 1,3-Dimethylimidazolium (DMIM) und 1,3-Diethylimidazolium (DEIM).

Carboxylatanionen A- in Formel (I) können Anionen von aliphatischen oder aromatischen Carbonsäuren mit 1 bis 20 Kohlenstoffatomen sein, bevorzugt sind Anionen von aliphatischen Carbonsäuren mit 1 bis 20 Kohlenstoffatomen.

Beispiele für Anionen von aromatischen Carbonsäuren sind Benzoat, Salicylat und Nicotinat. Alkanoatanionen, also die Anionen einer Alkancarbonsäure, können geradkettig oder verzweigt sein, bevorzugt sind sie geradkettig. Die zugrundeliegende Alkancarbonsäure weist 1 bis 20 Kohlenstoffatome auf, bevorzugt 2 bis 18 und besonders bevorzugt 2 bis 12 Kohlenstoffatome auf.

Beispiele für Alkanoat-Anionen sind Formiat, Acetat, Propionat, 2,2-Dimethylpropionat (Pivalat), n-Butanoat, Isobutanoat, n-Pentanoat, n-Hexanoat, n-Heptanoat, n-Octanoat, 2-Ethylhexanoat, Isooctanoat, n-Nonanoat, Isononanoat, n-Decanoat, 3-Propylheptanoat, n-Dodecanoat, Tetradecanoat, Hexadecanoat, Stearate und n-Eicosanoat, bevorzugt sind Acetat, Formiat, Propionat, n-Butanoat, Isobutanoat, n-Pentanoat, 2,2-Dimethylpropionat (Pivalat) und n-Hexanoat, besonders bevorzugt sind Acetat, Formiat und Propionat, insbesondere bevorzugt ist Acetat.

Die erfindungsgemäß verwendeten Katalysatoren sind geeignet für die Herstellung von Isolierhartschaum und für Sprühschaum-Anwendungen, Geräteisolierungen, isolierende Bauplatten und weitere Isolierprodukte, die geschlossenzelligen Polyurethan-Hartschaum enthalten. Die Erfindung umfasst Schäume, die einen Isocyanatindex zwischen 70 und 500, 90 bis 270 und typischerweise 100 bis 150 aufweisen. Die erfindungsgemäß verwendeten Katalysatoren werden mit trans-1-Chlor-3,3,3-trifluoropropen als halogenhaltigem Treibmittel verwendet, um eine verbesserte Systemstabilität bereitzustellen.

Als ein oder mehrere Additive E kann die Polyolmischung Zellstabilisatoren, Kettenverlängerer, Pigmente, Füllstoffe, organische Säuren oder Disäuren, Flammschutzmittel, zusätzliche Urethangelierungskatalysatoren, zusätzlichen Urethanschaumkatalysatoren, Übergangsmetallkatalysatoren oder Kombinationen davon enthalten.

Geeignete Zellstabilisatoren umfassen Silikontenside, anionische Tenside, kationische Tenside, zwitterionische Tenside, nichtionische Tenside und Kombinationen davon. In einer Ausführungsform ist der Zellstabilisator ein Silikontensid, wie Polyalkylsiloxan, Polyoxyalkylenpolyolmodifiziertes Dimethylpolysiloxan oder Alkylenglykol-modifiziertes Dimethylpolysiloxan. In einer weiteren Ausführungsform ist der Zellstabilisator ein anionisches Tensid, wie das Salz einer Fettsäure, das Salz eines Schwefelsäureesters, das Salz eines Phosphorsäureesters, das Salz einer Sulfonsäure oder Kombinationen davon. Geeignete kationische Tenside sind quartäre Ammoniumsalze (pH-abhängig oder permanent geladen) wie Cetyltrimethylammoniumchlorid, Cetylpyridiniumchlorid, polyethoxyliertes Talgamin, Benzalkoniumchlorid, Benzethoniumchlorid und dergleichen. Geeignete zwiterionische oder amphotere Tenside umfassen Sultaine, Aminosäuren, Iminosäuren, Betaine und Phosphate. Geeignete nichtionische Tenside umfassen Fettalkohole, Polyoxyethylenglykolalkylether, Polyoxypropylenglykolalkylether, Glucoside (wie Decyl-, Lauryl- und Octylglucoside), Polyoxyethylenglykolalkylphenolether, Glykolalkylester und dergleichen. Zellstabilisatoren können beispielsweise in Mengen von 0,1 bis 20 Gew.-% in der Polyolmischung enthalten sein.

Geeignete Pigmente sind organische Pigmente, anorganische Pigmente oder Kombinationen davon. In bestimmten Ausführungsformen, in denen das Pigment ein organisches Pigment ist, ist das Pigment ein Azo/Diazo-Farbstoff, ein Phthalocyanin, Dioxazin, Ruß oder eine Kombination davon. In anderen Ausführungsform, in denen das Pigment ein anorganisches Pigment ist, ist das Pigment Titandioxid, Eisenoxid, Chromoxid oder eine Kombination davon. Pigmente können beispielsweise in Mengen von 0,1 bis 10 Gew.-% in der Polyolmischung enthalten sein.

Geeignete Füllstoffe erhöhen die Dichte und Tragfähigkeit der Polyurethanschäume. In bestimmten Ausführungsformen ist der Füllstoff Bariumsulfat, Calciumcarbonat oder eine Kombination davon. Füllstoffe können beispielsweise in Mengen von 0,1 bis 20 Gew.-% in der Polyolmischung enthalten sein.

Geeignete Flammschutzmittel sind beispielsweise chlorierte Phosphatester, Phosphatester, chloriertes Paraffin, Melaminpulver oder Kombinationen davon. Flammschutzmittel können beispielsweise in Mengen von 0,1 bis 30 Gew.-% in der Polyolmischung enthalten sein.

Die Polyolmischung umfasst
a) von 10 bis 99,7 Gew.-%, vorzugsweise von 35 bis 97 Gew.-% mindestens eines Polyols als Komponente A,
b) von 0,1 bis 30 Gew.-%, vorzugsweise von 1 bis 15 Gew.-% eines Hyodrohalogenolefin-Treibmittels enthaltend trans-1-Chlor-3,3,3-trifluoropropen als Komponente B,
c) von 0,1 bis 10 Gew.-%, vorzugsweise von 0,5 bis 5 Gew.-% Wasser als Komponente C,
d) von 0,1 bis 10 Gew.-%, vorzugsweise von 0,5 bis 5 Gew.-% des Imidazoliumsalz-Katalysators der allgemeinen Formel (I) als Komponente D,
e) optional von 0 bis 80 Gew.-%, vorzugsweise von 1 bis 40 Gew.-% eines oder mehrerer weiterer Additive als eine oder mehrere Komponenten E.

Die Erfindung betrifft weiterhin ein Verfahren zur Herstellung von Polyurethanhartschaumstoffen mit einem Isocyanatindex von 100 bis 150 für Sprühschaum-Anwendungen durch Umsetzung von
(i) organischen oder modifizierten organischen Polyisocyanaten mit
(ii) der erfindungsgemäß verwendeten Polyolmischung.

Als organische Polyisocyanate (i) kommen die an sich bekannten aliphatischen, cycloaliphatischen, araliphatischen und vorzugsweise die aromatischen mehrwertigen Isocyanate in Frage. Die organischen Polyisocyanate können gegebenenfalls modifiziert sein.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugte Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch modifizierte mehrwertige Isocyanate, d.h. Produkte, die durch chemische Umsetzung organischer Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Polyisocyanate.

Zur Herstellung der erfindungsgemäßen Polyurethan-Hartschaumstoffen wird ganz besonders bevorzugt Polymer-MDI eingesetzt.

Die Erfindung betrifft auch die Verwendung eines Imidazoliumsalzes der allgemeinen Formel (I) als Katalysator zur Herstellung von Polyurethanhartschaumstoffen für Sprühschaum-Anwendungen in der Polyolmischung enthaltend ein Hydrohalogenolefin-Treibmittel enthaltend trans-1-Chloro-3,3,3-trifluoroprppen.

Die Erfindung wird durch die nachstehenden Beispiele näher erläutert.

### Beispiele

### Verwendete Komponenten:

| | |
|---|---|
| Lupranol 3300: | Polyethertriol mit einer OH-Zahl von 400 mg KOH/g |
| Schaumstabilisator: | silikonbasiert |
| Treibmittel: | R-1233zd (E) = 1-Chlor-3,3,3-trifluor-1-propen |
| Lupranat M20S: | Polymer-MDI, NCO 31.5 %, Viskosität 210 mPas |

### Methode 1

Eine Polyolmischung wird durch Vermischen von 100 g Lupranol 3300, 4 g Wasser und 2 g Schaumstabilisator hergestellt. 15 g dieser Mischung mit zusätzlich 1 Gew.-% Katalysator werden mit 17,1 g Lupranat M20S in einem 0,5 L-Plastikbecher 5 Sekunden lang mit einem Propellerrührer mit 2000 U/min vermischt und vermessen.

Es wurden folgende Parameter bestimmt:
Cream time: Zeit, bis die PU-Mischung anfängt zu steigen;
Halbe Höhe: Zeit bis zum Erreichen der halben Höhe des Bechers (7 cm);
Zeit bis zum Erreichen der Becherkante;
Zeit, bis Schaumbildung beendet ist;
Schaumhöhe.

Die Ergebnisse sind in Tabelle 1 wiedergegeben.

### Methode 2

Hierzu wurde eine Stammlösung aus Lupranol 3300, Schaumstabilisator und Wasser hergestellt. Davon wurden pro Gefäß 52 g dieser Stammlösung enthaltend 50 g Lupranol 3300, 1 g Schaumstabilisator und 1 g Wasser in eine druckfeste 500 mL-Laborglasflasche eingewogen, anschließend wurden 1 g Katalysator und 7,5 g Treibmittel R-1233zd (E) hinzugefügt. Die Gefäße wurden jeweils 2 bzw. 4 Wochen bei 45 °C gelagert. Aus jeder Flasche wurden 17 g der Polyolmischung mit 17,1 g Lupranat M20S in einem 0,5 L-Plastikbecher 5 Sekunden lang mit einem Propellerrührer mit 2000 U/min vermischt und vermessen.

Es wurden folgende Parameter bestimmt:
Cream time: Zeit, bis die PU-Mischung anfängt zu steigen;
Halbe Höhe: Zeit bis zum Erreichen der halben Höhe des Bechers (7 cm);
Zeit bis zum Erreichen der Becherkante;
Zeit, bis Schaumbildung beendet ist;
Schaumhöhe.

Die Ergebnisse sind in Tabelle 2 wiedergegeben.

Wie der Tabelle 2 zu entnehmen ist, zeigt BDMAEE eine unzureichende Lagerstabilität in Gegenwart von R-1233zd(E).

DMI ist toxikologisch nicht ganz unbedenklich (hautsensibilisierend).

**Tabelle 1 - Methode 1**

| Beispiele | Katalysator | Name | Cream time | Halbe Höhe (7 cm) | Zeit bis zum Erreichen der Becherkante | Zeit bis Schaumbildung beendet | Schaumhöhe |
|---|---|---|---|---|---|---|---|
| V1 | | DMI - 1,2-Dimethylimidazol | 21 s | 63 s | 82 s | 163 s | 18,7 cm |
| 1 | 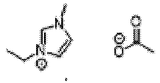 | EMIM-Acetat | 22 s | 62 s | 81 s | 212 s | 20,1 cm |
| 2 | 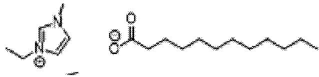 | EMIM-Dodecanoat | 29 s | 117 s | 164 s | 365 s | 19,0 cm |
| 3 | 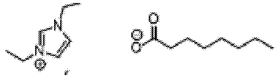 | DEIM-Octanoat | 31 s | 102 s | 142 s | 318 s | 18,8 cm |
| 4 | 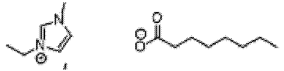 | EMIM-Octanoat | 32 s | 105 s | 146 s | 312 s | 19 cm |
| 5 | 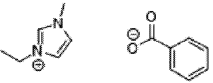 | EMIM-Benzoat | 29 s | 108 s | 169 s | 389 s | 18,9 cm |
| V2 | 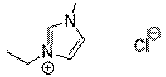 | Basionics ST80 | 110 s | 332 s | - | >840 s | 14 cm |
| V3 | 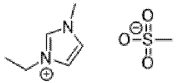 | Basionics ST 35 | 92 s | 309 s | 865 s | >840 s | 14,0 cm |
| V4 | EMIM-Diethylphosphat | EMIM-Diethylphosphat | 46 s | 251 s | 707 s | 758 s | 14,0 cm |
| V5 | 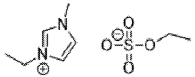 | Basionics LQ01 | 96 s | 327 s | 832 s | >840 s | 14 cm |

| | | | | | | | |
|---|---|---|---|---|---|---|---|
| EMIM = 1,3-Ethylmethylimidzolium DEIM = 1,3-Diethylimidazolium | | | | | | | |

**Tabelle 2 - Methode 2**

| Beispiele | Treibmittelzugabe | Katalysator | Lagerungsdauer in Wochen | Cream time | Halbe Höhe (7 cm) | Zeit bis zum Erreichen der Becherkante | Zeit bis Schaumbildung beendet | Schaumhöhe |
|---|---|---|---|---|---|---|---|---|
| 6 | ja | DEIM-Acetat | 0 | 13 s | 40 s | 62 s | 147 s | 21,8 cm |
| 6 | ja | DEIM-Acetat | 2 | 13 s | 43 s | 66 s | 150 s | 21,0 cm |
| 6 | ja | DEIM-Acetat | 4 | 14 s | 42 s | 63 s | 148 s | 21,2 cm |
| 7 | ja | DMIM-Acetat | 0 | 15 s | 41 s | 63 s | 145 s | 21,6 cm |
| 7 | ja | DMIM-Acetat | 2 | 15 s | 40 s | 60 s | 143 s | 21,5 cm |
| 7 | ja | DMIM-Acetat | 4 | 16 s | 42 s | 63 s | 146 s | 21,5 cm |
| V1 | ja | DMI | 0 | 24 s | 59 s | 77 s | 132 s | 20 cm |
| V1 | ja | DMI | 2 | 23 s | 58 s | 76 s | 133 s | 20,5 cm |
| V1 | ja | DMI | 4 | 23 s | 57 s | 76 s | 135 s | 20,7 cm |
| V6 | ja | BDMAEE | 0 | 5s | 10 s | 18 s | 70 s | 21,5 cm |
| V6 | ja | BDMAEE | 2 | 7s | 17 s | 35 s | 98 s | 20,5 cm |
| V6 | ja | BDMAEE | 4 | 8s | 36 s | 73 s | 162 s | 19,0 cm |
| 8 | ja | EMIM-Acetat | 0 | 13 s | 40 s | 60 s | 146 s | 21,8 cm |
| 8 | ja | EMIM-Acetat | 2 | 13 s | 42 s | 62 s | 149 s | 21,3 cm |
| 8 | ja | EMIM-Acetat | 4 | 13 s | 41 s | 63 s | 150 s | 21,1 cm |
| 9 | ja | EMIM-Octanoat | 0 | 17s | 56 s | 84 s | 183 s | 21,3 cm |
| 9 | ja | EMIM-Octanoat | 2 | 18s | 58 s | 86 s | 182 s | 21,0 cm |
| 9 | ja | EMIM-Octanoat | 4 | 18s | 59 s | 86 s | 183 s | 20,3 cm |

| | | | | | | | | |
|---|---|---|---|---|---|---|---|---|
| DEIM = 1,3-Diethylimidazolium DMIM = 1,3-Dimethylinidazolium | | | | | | | | |

## Patentansprüche

1. Verwendung einer Polyolmischung umfassend
a) von 10 bis 99,7 Gew.-% mindestens eines Polyols als Komponente A,
b) von 0,1 bis 30 Gew.-% eines Hydrohalogenolefin-Treibmittels enthaltend trans-1-Chlor-3,3,3-trifluoropropen als Komponente B,
c) von 0,1 bis 10 Gew.-% Wasser als Komponente C,
d) von 0,1 bis 10 Gew.-% eines Katalysators als Komponente D,
e) optional von 0 bis 80 Gew.-% eines oder mehrerer weiterer Additive als eine oder mehrere weitere Komponenten E,
**dadurch gekennzeichnet, dass** der Katalysator D ein Imidazoliumsalz der allgemeinen Formel (I) enthält, 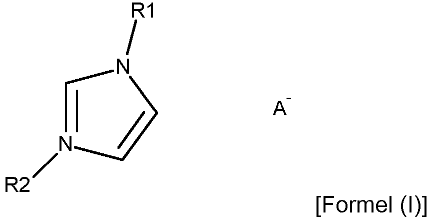
worin R1, R2 unabhängig voneinander einen aliphatischen, cycloaliphatischen, araliphatischen oder aromatischen Rest mit 1 bis 20 Kohlenstoffatomen, der daneben noch ein oder mehrere Heteroatome enthalten kann, bedeuten,
worin A- ein Carboxylatanion mit 1 bis 20 Kohlenstoffatomen, das daneben noch ein oder mehrere weitere Heteroatome enthalten kann, bedeutet,
für Sprühschaum-Anwendungen.

2. Verwendung einer Polyolmischung nach Anspruch 1, **dadurch gekennzeichnet, dass** R1 und R2 in der allgemeinen Formel (I) ausgewählt sind aus Methyl und Ethyl.

3. Verwendung einer Polyolmischung nach Anspruch 1 oder 2, **dadurch gekennzeichnet, dass** das Carboxylatanion A- ausgewählt ist aus der Gruppe bestehend aus Formiat, Acetat, Propionat, 2,2-Dimethylpropionat (Pivalat), n-Butanoat, Isobutanoat, n-Pentanoat, n-Hexanoat, n-Heptanoat, n-Octanoat, 2-Ethylhexanoat, Isooctanoat, n-Nonanoat, Isononanoat, n-Decanoat, 3-Propylheptanoat, n-Dodecanoat, Tetradecanoat, Hexadecanoat, Stearate und n-Eicosanoat.

4. Verwendung einer Polyolmischung nach einem der Ansprüche 1 bis 3, **dadurch gekennzeichnet, dass** das Carboxylatanion A- Acetat ist.

5. Verwendung einer Polyolmischung nach einem der Ansprüche 1 bis 4, **dadurch gekennzeichnet, dass** das Polyol A ein Polyetherpolyol und optional ein Polyesterpolyol enthält.

6. Verwendung einer Polyolmischung nach einem der Ansprüche 1 bis 5, **dadurch gekennzeichnet, dass** die ein oder mehreren weiteren Additive E ausgewählt sind aus Zellstabilisatoren, Kettenverlängerern, Pigmenten, Füllstoffen, organischen Säuren oder Disäuren, Flammschutzmitteln, zusätzlichen Urethangelierkatalysatoren, zusätzlichen Urethantschaumkatalysatoren, Übergangsmetallkatalysatoren oder Kombinationen davon.

7. Verwendung nach einem der Ansprüche 1 bis 6 zur Herstellung von Isolierhartschaum.

8. Verwendung nach Anspruch 7 zur Gerätesiolierung.

9. Verfahren zur Herstellung von Polyurethanhartschaumstoffen mit einem Isocyanatindex von 100 bis 150 für Sprühschaum-Anwendungen durch Umsetzung von (i) organischen oder modifizierten organischen Polyisocyanaten mit (ii) einer Polyolmischung wie in einem der Ansprüche 1 bis 6 definiert.

10. Verwendung eines Imidazoliumsalzes der allgemeinen Formel (I) 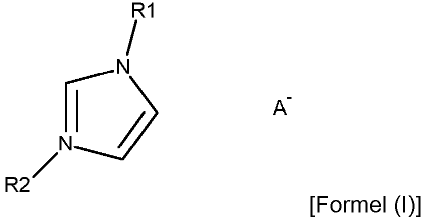
worin R1, R2 unabhängig voneinander einen aliphatischen, cycloaliphatischen, araliphatischen oder aromatischen Rest mit 1 bis 20 Kohlenstoffatomen, der daneben noch ein oder mehrere Heteroatome enthalten kann, bedeuten,
worin A- ein Carboxylatanion mit 1 bis 20 Kohlenstoffatomen, das daneben noch ein oder mehrere weitere Heteroatome enthalten kann, bedeutet,
als Katalysator in einer Polyolmischung wie in einem der Ansprüche 1 bis 6 definiert enthaltend ein Hydrohalogenolefin-Treibmittel enthaltend trans-1-Chloro-3,3,3-trifluoropropen zur Herstellung von Polyurethan-Hartschaumstoffen für Sprühschaum-Anwendungen.

11. Verwendung nach Anspruch 10, **dadurch gekennzeichnet, dass** R1 und R2 in der allgemeinen Formel (I) ausgewählt sind aus Methyl und Ethyl.

12. Verwendung nach Anspruch 10 oder 11, **dadurch gekennzeichnet, dass** A⁻ in Formel (I) Acetat ist.

13. Verwendung nach einem der Ansprüche 10 bis 12 zur Herstellung von Isolierhartschaum.

14. Verwendung nach Anspruch 13 zur Geräteisolierung.

## Claims

1. Use of a polyol compound comprehensively
a) from 10 to 99.7% by weight of at least one polyol as component A,
b) from 0.1 to 30% by weight of a hydrohaloolefin propellant containing trans-1-chloro-3,3,3-trifluoropropene as component B,
c) from 0.1 to 10 % by weight of water as component C,
d) from 0.1 to 10 % by weight of a catalyst as component D,
e) optionally of Obis 80% by weight of one or more additional additives as one or more additional components E,
**characterized in that** the catalyst D contains an Imidazolium salt of the general formula (I), 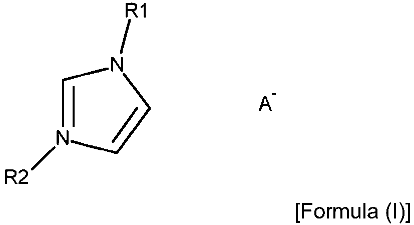
wherein R1, R2 independently of each other contains an aliphatic, cycloaliphatic, araliphatic or aromatic residue with 1 to 20 carbon atoms, which also contains a or can contain several heteroatoms, mean,
wherein A- means a carboxylatanion with 1 to 20 carbon atoms, which can also contain one or more other heteroatoms,
for spray foam applications.

2. The use of a polyol mixture according to claim 1, **characterized in that** R1 and R2 are selected in the general formula (I) of methyl and ethyl.

3. The use of a polyol mixture according to claim 1 or 2, **characterized in that** the carboxylatanion A- is selected from the group consisting of formate, ace Propionate, 2,2-Dimethyl Propionate (Pivalate), n-Butanoate, Lsobutanoate, N-Pentanoate, N-Hexanoate, N-Heptanoate, N-Octanoate, 2-Ethylhexanoate, Lsooctanoate, N-Nonanoate, Isonona-noate, N-Decanoate, 3-Propylheptanoate, N-Dodecanoate, Tetradecanoate, Hexadecanoate, Ste-arate, and N-Eicosanoate.

4. The use of a polyol mixture according to any one of claims 1 to 3, **characterized in that** the carboxylatanion is A-acetate.

5. The use of a polyol mixture according to any one of claims 1 to 4, **characterized in that** the polyol A contains a polyether polyol and optionally a polyester polyol.

6. The use of a polyol mixture according to any one of claims 1 to 5, thereby indicates that one or more other additives E are selected from cell stabilizers, chain extenders, pigments, fillers, organic acids or diacids, flame retardants, additional urethane catalysts, additional urethane foam catalysts, transition metal catalysts or combinations thereof.

7. Use according to any one of claims 1 to 6 for the preparation of rigid foam foam.

8. Use according to claim 7 for device iolation.

9. Process for the production of rigid polyurethane foams with an Isocyanate index from 100 to 150 for spray foam applications by implementing
(i) organic or modified organic polyisocyanates with
(ii) a polyol mixture as defined in any of claims 1 to 6.

10. Use of an Imidazolium salt of the general formula (I) 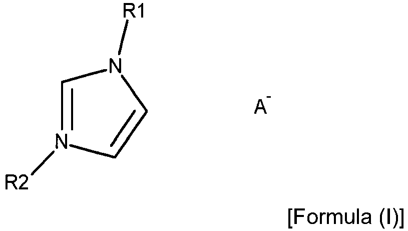
wherein R1, R2 independently of each other is an aliphatic, cycloaliphatic, araliphatic or aromatic residue with 1 to 20 carbon atoms, which also contains an o-which can contain several heteroatoms, mean,
wherein A- means a carboxylatanion with 1 to 20 carbon atoms, which can also contain one or more other heteroatoms,
as a catalyst in a polyol mixture as defined in one of claims 1 to 6, comprising a hydrohaloolefin propellant containing trans-1-chloro-3,3,3-trifluoropropene
for the production of rigid polyurethane foams for spray foam applications.

11. The use of claim 10, **characterized in that** R1 and R2 in the general formula (I) are selected from methyl and ethyl.

12. The use of claim 10 or 11, **characterized in that** A- in formula (I) is acetate.

13. Use according to any one of claims 10 to 12 for the preparation of rigid foam for the production of rigid foam.

14. Use according to claim 13 for equipment insulation.

## Revendications

1. Utilisation complète d'un composé polyol
a) de 10 à 99,7 % en poids d'au moins un polyol comme composant A,
b) de 0,1 à 30 % en poids d'un propergol hydrohalooléfine contenant du trans-1-chloro-3,3,3-trifluoropropène comme composant B,
c) de 0,1 à 10 % en poids de l'eau comme composante C,
d) de 0,1 à 10 % en poids d'un catalyseur comme composante D,
e) optionnellement d'Obis 80 % en poids d'un ou plusieurs additifs supplémentaires comme un ou plusieurs composants additionnels E,
**caractérisé en ce que** le catalyseur D contient un sel d'Imidazolium de la formule générale (I), 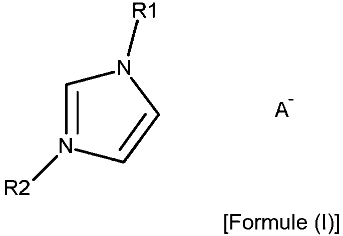
où R1, R2, indépendamment l'un de l'autre, contient un résidu aliphatique, cycloaliphatique, araliphatique ou aromatique contenant de 1 à 20 atomes de carbone, qui contient également un
ou peut contenir plusieurs hétéroatomes, signifiant,
où A- désigne un carboxylatanion contenant de 1 à 20 atomes de carbone, qui peut également contenir un ou plusieurs autres hétératomes,
Pour les applications en mousse projetée.

2. L'utilisation d'un mélange de polyol selon la revendication 1, **caractérisée par le fait que** R1 et R2 sont sélectionnés dans la formule générale (I) du méthyl et de l'éthyle.

3. L'utilisation d'un mélange polyol selon la revendication 1 ou 2, **caractérisée par le fait que** le carboxylatanion A- est sélectionné dans le groupe composé de formate, ace Propionate, 2,2-Propionate de diméthyle (pivalate), n-Butanoate, Lsobutanoate, N-Pentanoate, N-Hexanoate, N-Heptanoate, N-Octanoate, 2-Ethylhexanoate, Lsooctanoate, N-Nonanoate, Lsonona-noate, N-Décanoate, 3-Propylheptanoate, N-Dodécanoate, Tétradecanoate, Hexadécanoate, Ste-arate et N-Eicosanoate.

4. L'utilisation d'un mélange de polyol selon l'une des revendications 1 à 3, **caractérisée par** le carboxyllatanion étant de l'acétate A.

5. L'utilisation d'un mélange de polyol selon l'une des revendications 1 à 4, **caractérisée par le fait que** le polyol A contient un polyol polyéther et éventuellement un polyol polyester.

6. L'utilisation d'un mélange de polyol selon l'une des revendications 1 à 5, ainsi indique qu'un ou plusieurs autres additifs E sont sélectionnés parmi les stabilisateurs cellulaires, les prolongateurs de chaîne, les pigments, les agents de remplissage, les acides organiques ou diacides, les retardateurs de flamme, les catalyseurs d'uréthane supplémentaires, les catalyseurs en mousse d'uréthane supplémentaires, les catalyseurs de métaux de transition ou des combinaisons de ceux-ci.

7. Utilisez selon l'une des revendications 1 à 6 pour la préparation de mousse rigide.

8. Utilisez selon la revendication 7 pour l'iolation de l'appareil.

9. Procédé de production de mousses rigides en polyuréthane avec un indice d'Isocyanate de 100 à 150 pour les applications de mousse projetée en mettant en œuvre
(i) Organiques ou organiques modifiés polyisocyanates avec
(ii) un mélange de polyol tel que défini dans l'une des revendications 1 à 6.

10. Utilisation d'un sel d'Imidazolium de la formule générale (I) 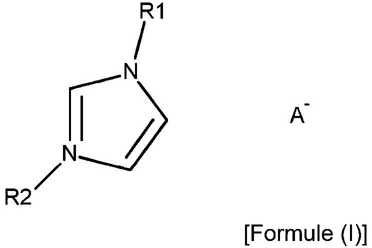
où R1, R2, indépendamment l'un de l'autre, est un résidu aliphatique, cycloaliphatique, araliphatique ou aromatique contenant de 1 à 20 atomes de carbone, qui contient également un o-
qui peuvent contenir plusieurs hétéroatomes, signifie,
où A- désigne un carboxylatanion contenant de 1 à 20 atomes de carbone, qui peut également contenir un ou plusieurs autres hétératomes,
comme catalyseur dans un mélange de polyol tel que défini dans l'une des revendications 1 à 6, comprenant un propergol hydrohalooléfine contenant du trans-1-chloro-3,3,3-trifluoropropène
pour la production de mousses de polyuréthane rigides destinées aux applications en mousse pulvérisée.

11. L'utilisation de la revendication 10, **caractérisée par le fait que** R1 et R2 dans la formule générale (I) sont sélectionnés à partir du méthyl et de l'éthyle.

12. L'utilisation de l'affirmation 10 ou 11, **caractérisée par le fait que** A- dans la formule (I) est l'acétate.

13. Utiliser selon l'une des revendications 10 à 12 pour la préparation de mousse rigide destinée à la production de mousse rigide.

14. Utilisez selon la revendication 13 pour l'isolation des équipements.
